# EUROPÄISCHE PATENTSCHRIFT

(11) **EP 0 972 267 B1**
(45) Veröffentlichungstag und Bekanntmachung des Hinweises auf die Patenterteilung: **16.10.2002**
(21) Anmeldenummer: 99907473.5
(22) Anmeldetag: 02.02.1999
(51) Int. Cl.: G06K 9/00

(54) **VERFAHREN UND ANORDNUNG ZUR GEWINNUNG VON BILDINFORMATIONEN ÜBER OBERFLÄCHENSTRUKTUREN**
METHOD AND ARRANGEMENT FOR OBTAINING IMAGE INFORMATION RELATING TO SURFACE STRUCTURES
PROCEDE ET SYSTEME POUR OBTENIR DES DONNEES-IMAGE SUR DES STRUCTURES SUPERFICIELLES

(30) Priorität: 03.02.1998 DE 19804129
(43) Veröffentlichungstag der Anmeldung: 19.01.2000
(73) Patentinhaber: Heimann Biometric Systems GmbH, 07743 Jena (DE)
(72) Erfinder: HILLMANN, Jürgen, D-07745 Jena (DE); RICHTER, Uwe, D-07745 Jena (DE)
(74) Vertreter: Niestroy, Manfred
(86) Internationale Anmeldenummer: EP9900650
(87) Internationale Veröffentlichungsnummer: WO99040535

(56) Entgegenhaltungen:
- US-A- 5 650 842
- PATENT ABSTRACTS OF JAPAN vol. 013, no. 019 (P-814), 18. Januar 1989 & JP 63 223888 A (SHINSAIBI DENKI KK;OTHERS: 04), 19. September 1988

## Beschreibung

### Gebiet der Erfindung

Die Erfindung bezieht sich auf ein Verfahren zur Gewinnung von Bildinformationen, beispielsweise über die Oberflächenstruktur einer Handinnenfläche, einer Handkante, der gestreckten Vierfinger oder eines gestreckten Daumens, bei dem das aufzunehmende Objekt auf eine Abtastfläche aufzulegen ist, mit einem auf die Abtastfläche gerichteten und von der Abtastfläche reflektierten Beleuchtungsstrahlengang ein Bild der Oberflächenstruktur aufgenommen und dieses Bild nachfolgend auf die Empfangsfläche eines optoelektronischen Bildwandlers projiziert wird. Die Erfindung bezieht sich weiterhin auf eine Anordnung zur Durchführung des Verfahrens.

### Stand der Technik

Im Stand der Technik ist die gerätetechnische Erfassung von Abdrücken für die traditionellen Formate der abgerollten Einzelfinger, der simultan zu erfassenden flachen, nichtgerollten vier gestreckten Finger einer Hand sowie der flachen, nichtgerollten gestreckten Daumen bekannt. Das Format der Abtastfläche beträgt im Falle der gerollten Einzelfinger typischerweise etwa 40mm x 40mm und im Falle der flachen simultanen Abdrücke der vier gestreckten Finger etwa 75mm x 58mm. Die optoelektronischen Abtastgeräte sind diesen Formaten angepaßt.

Der Gewinnung solcher Abdrücke bzw. des Papillarlinienmusters liegt das optische Grundprinzip der gestörten Totalreflektion zugrunde. Die Ausgestaltung dieses Grundprinzips besteht bei den bekannten optoelektronischen Verfahren und Anordnungen im wesentlichen in der Anpassung an die konkreten Gegebenheiten der verfügbaren Bildwandler, die meist in Form von CCD-Kameras genutzt werden. Daraus resultiert zugleich auch die Notwendigkeit der Anpassung an die in beschränkter Anzahl verfügbaren lichtempfindlichen Sensoren der Bildwandler in horizontaler und vertikaler Richtung im Hinblick auf die optischen Anforderungen.

Die DE 34 21 220 C2 beschreibt eine Vorrichtung zur Erfassung, Untersuchung und Identifikation von Fingerabdrücken, bei der eine verzerrungsfreie optische Abbildung des Fingerabdrucks auf die lichtempfangende Fläche einer TV-Kamera erfolgt. Durch die besondere optische Anordnung, bei der zwischen einem Reflexionsprisma und dem bildseitigen Endabschnitt der Vorrichtung Ablenkprismen zur anamorphotischen Vergrößerung des Fingerabdruckes sowie zum Ausgleich des Astigmatismus vorgesehen sind, wird das Seitenverhältnis der Fingerabtastfläche unverändert auf den Sensor der TV-Kamera übertragen.

Nachteilig bei dieser Anordnung ist, daß die Notwendigkeit, eine verzerrungsfreie optischen Anordnung zu schaffen, zu Prismen mit sehr kleinen Winkeln führen kann, deren Herstellung technologisch schwierig ist und deren Verwendung im Gerät wegen der sehr geringen zulässigen Toleranzen außerdem Justier- und Bildgüteprobleme zur Folge hat.

Die US 5,650,842 beschreibt eine optische Anordnung, die ausschließlich auf die Aufnahme der simultanen Vierfinger ausgerichtet ist. Dabei wird das rechteckige Format der Fingerabtastfläche mit einem extremen Seitenverhältnis von etwa 1,6 : 1 mittels einer speziellen optischen Anordnung so auf eine CCD-Kamera abgebildet, daß das Bild auf das Seitenverhältnis der Sensorfläche mit etwa 1,33 : 1 angepaßt wird. Diese starke optische Verzerrung in der horizontalen Richtung um den Faktor 0,831 wird nachfolgend beim Auslesen der analogen, von der CCD-Kamera bereitgestellten Bildsignale mit einer Überabtastung um den Faktor 1,203 kompensiert.

Diese Verfahrensweise hat den Nachteil, daß zum Erhalt einer sauberen Signalform das analoge Signal in seiner Bandbreite stark begrenzt werden muß, damit im überabgetasteten digitalen Bildsignal keine Störungen auftreten. Das wirkt sich negativ auf die optische Auflösung in horizontaler Richtung aus. In der genannten Veröffentlichung wird zudem der Abbildungsstrahlengang von der Fingerabtastfläche weg in Richtung der vertikalen Achse des Bildes geführt. Dadurch aber muß nachteiligerweise das Gerätegehäuse nach vorn, d.h. zum Benutzer hin, vergrößert und eine senkrechte Abschlußfläche geschaffen werden, wodurch die Zugänglichkeit besonders bei der Aufnahme der flachen gestreckten Daumen erheblich erschwert oder sogar bei Personen mit eingeschränkter Gelenkigkeit der Fingerglieder die Erfassung unmöglich gemacht wird.

Bei der Erfassung der Fingerabdrücke einer Person, vor allem im polizeilichen Erkennungsdienst, besteht eine wesentliche Forderung darin, Bilder mit einer möglichst hohen optischen Qualität zu erzeugen, damit erstens die Grundlage für deren Einspeisung und Verwendung in automatischen Finger- bzw. Handabdruckldentifikationssystemen gegeben und zweitens eine hohe Trefferrate beim Vergleich mit bereits gespeicherten Bildern gewährleistet ist.

Aus diesem Grunde darf die örtliche Auflösung ein Minimum nicht unter- und die geometrische Verzerrung ein Maximum nicht überschreiten. Eine hohe örtliche Auflösung ist wichtig im Hinblick auf klare, scharfe Sichtbarkeit selbst feiner Strukturen der Papillarlinien; verringerte Verzerrungen bieten die Gewähr für eine eindeutige Ermittlung der charakteristischen Merkmale, der sogenannten Minutien. Daneben wird als weitere Voraussetzung auch noch ein guter Bildkontrast gefordert.

Weiterhin wird von den Anwendern derartiger Identifikationssysteme zunehmend gewünscht, daß mit nur einem Gerät und auch mit einundderselben an diesem einen Gerät vorhandenen Abtastfläche sowohl die Bilder einer Handinnenfläche, einer Handkante, des gestreckten Daumens, der gestreckten Vierfinger usw. erfaßt werden können, so daß es nicht mehr erforderlich ist, eine Vielzahl verschiedener anwendungsspezifischer Geräte vorrätig zu haben, um alle erkennungsdienstlichen Aufgaben erfüllen zu können.

Die bisher im Stand der Technik verfügbaren Lösungen sind nicht geeignet, die vorgenannten Anforderungen umfassend zu erfüllen.

### Beschreibung der Erfindung

Ausgehend vom Stand der Technik besteht die Aufgabe der Erfindung darin, ein Verfahren der vorbeschriebenen Art so weiterzubilden, daß auf eine für die betroffene Person bequeme Weise das ebene Bild einer Handinnenfläche und/oder einer Handkante und/oder der gestreckten Vierfinger und/oder eines gestreckten Daumens mit einundderselben Abtastfläche und mit hoher Bildgüte erfolgt.

Erfindungsgemäß wird die Aufgabe dadurch gelöst, daß das Bild der Oberflächenstruktur mit einem Seitenverhältnis B_{A} : H_{A} < 1 aufgenommen wird, wobei die Finger der auf die Abtastfläche aufgelegten Hand parallel zur Höhe H_{A} ausgerichtet sind, das Seitenverhältnis des Bildes während der optischen Übertragung von der Abtastfläche zum opto-elektronischen Bildwandler geändert wird, wobei die Höhe so gestaucht und/oder die Breite so gestreckt wird, daß auf die Empfangsfläche ein auf das Seitenverhältnis B_{E} : H_{E}> 1 optisch verzerrtes Bild gelangt, dann das optisch verzerrte Bild in elektronische Bildinformationen gewandelt wird, wobei für jedes Ausgangssignal eines Einzelsensors genau ein analoger oder digitaler Wert gewonnen wird und nachfolgend die elektronische Bildinformation einer rechnerischen Änderung des Seitenverhältnisses unterzogen wird, wobei die Höhe rechnerisch gestreckt und/oder die Breite rechnerisch gestaucht wird, bis das ursprüngliche Seitenverhältnis B_{A} : H_{A} < 1 wiederhergestellt ist.

Damit ist es möglich, ein Abtastprisma zu nutzen, dessen Abtastfläche ausreichend groß ist, um die gesamte Handinnenfläche zu erfassen. Mit einer der Abtastfläche nachgeordneten vorzugsweise anamorphotischen Optik wird das Seitenverhältnis des mit dieser Abtastfläche aufgenommenen optischen Bildes durch Streckung und/oder Stauchung definiert verzerrt und über ein abbildendes Objektiv auf die Empfangsfläche (beispielsweise einer CCD-Kamera) gerichtet, wo die optischen in analoge elektronische Bildinformationen umgewandelt werden. Erfindungsgemäß wird hierbei das Seitenverhältnis nicht geändert.

Anschließend werden die analogen elektronischen Bildinformationen digitalisiert, und zwar im Gegensatz zum Stand der Technik so, daß für jede von einem lichtempfindlichen CCD-Einzelsensor ausgelesene analoge Bildinformation genau ein digitaler Wert entsteht. Es erfolgt also eine bildpunktsynchrone Digitalisierung unter Beibehaltung der Verzerrung, mit der das Bild auf die Empfangsfläche trifft.

Das nun in digitaler Form vorliegende Bild wird jetzt in der Richtung gestaucht, in der es vorher optisch gestreckt worden ist und/oder in der Richtung gestreckt, in der es vorher optisch gestaucht worden ist, wobei der Stauchungsfaktor genau die zuvor mit der anamorphotischen Optik bewirkte definierte Verzerrung des Bildseitenverhältnisses kompensiert. Im Ergebnis entsteht ein digitales, unverzerrtes Abbild der Handpapillarlinien.

Der Vorteil besteht darin, daß mit nur einer Kamera und mit gestellfesten optischen Komponenten bei einer hohen optischen Auflösung die Aufnahme des ebenen Bildes einer Handinnenfläche und/oder einer Handkante und/oder der gestreckten Vierfinger und/oder der gestreckten Daumen möglich ist. Die so erzielbare Auflösung genügt beispielsweise nicht nur dem derzeit für die Anwendung im polizeilichen Erkennungsdiensten gefordertem Qualitätsstandard von 500 Pixel/Inch, sondern übertrifft diesen.

In einer vorteilhaften Ausgestaltung der Erfindung ist vorgesehen, daß das Bild von einer Abtastfläche mit einem Seitenverhältnis B_{A} : H_{A} = 0,92 gewonnen und das Seitenverhältnis des Bildes im Verlaufe der optischen Übertragung von der Abtastfläche zur Sensorempfangsfläche in das Seitenverhältnis B_{E} : H_{E} = 1,04 geändert wird. Die Änderung des Seitenverhältnisses des Bildes auf dem Wege von der Abtastfläche zur Empfangsfläche wird dabei bevorzugt mit Hilfe einer anamorphotischen Optik bzw. einer anamorphotischen optischen Baugruppe vorgenommen, die aus drei Prismen und einem Objektiv besteht.

Die Stauchung der Höhe und/oder die Streckung der Breite des digitalisierten Bildes erfolgt in einer bevorzugten Ausgestaltung der Erfindung rechnerisch durch Interpolation. Das Bild kann danach über einen Monitor visuell wahrnehmbar ausgegeben oder auch als Datensatz abgelegt und zu gegebener Zeit weiterverwendet werden.

Abgesehen von den Unterschieden in der Art und Weise der optischen Verzerrung des Bildes im Strahlengang zwischen der Abtastfläche und der Sensorempfangsfläche wird im Gegensatz zum Stand der Technik die optische Verzerrung nicht durch eine Überabtastung der am Sensorausgang vorliegenden Bildinformationen kompensiert, sondern es wird zunächst eine bildpunktsynchrone Digitalisierung vorgenommen und danach rechnerisch, vorzugsweise durch Interpolation, eine Reduzierung der Anzahl der Bildinformationen und damit eine Anpassung der Auflösung an die geforderte Zielauflösung erreicht.

Weiterhin ist in einer Ausgestaltung der Erfindung vorgesehen, daß die Gewinnung des ebenen Bildes des Finger- oder Handabdruckes nach dem Prinzip der gestörten Totalreflektion vorgenommen wird. Dabei wird das ebene Bild von den Punkten der Abtastfläche gewonnen, die sich mit Strukturerhebungen der Hand bzw. der Finger in Kontakt befinden.

Alternativ hierzu kann die Gewinnung des Bildes auch aus der diffusen Reflexion des Beleuchtungslichtes von den Abschnitten der Abtastfläche erfolgen, die sich mit den Strukturerhebungen der Hand in Kontakt befinden.

Eine weitere Aufgabe der Erfindung besteht darin, eine Anordnung zu schaffen, die die Nachteile der aus dem Stand der Technik bekannten Anordnungen nicht aufweist und die eine hohe optische Auflösung in beiden Koordinaten des ebenen Bildes erreicht.

Diese Aufgabe wird erfindungsgemäß dadurch gelöst, daß die Abtastfläche und das gewonnene Bild der Oberflächenstruktur ein Seitenverhältnis B_{A} : H_{A} < 1 aufweisen, daß in dem von der Abtastfläche reflektierten Beleuchtungsstrahlengang mindestens eine das Seitenverhältnis des Bildes beeinflussende optische Baugruppe vorgesehen ist, durch die eine optische Streckung der Breite und/oder eine optische Stauchung der Höhe und damit eine optische Verzerrung des Bildes auf das Seitenverhältnis B_{E} : H_{E} > 1 erfolgt, daß den Einzelsensoren des opto-elektronischen Bildwandlers Analog-Digital-Wandler zur Wandlung der Ausgangssignale in jeweils genau einen digitalen Wert sowie eine Recheneinheit nachgeschaltet sind, in welcher eine rechnerische Stauchung der Breite und/oder eine rechnerische Streckung der Höhe und damit eine Entzerrung des Bildes auf das ursprüngliche Seitenverhältnis B_{A} : H_{A} < 1 vorgenommen wird.

Vorteilhaft beträgt das Seitenverhältnis B_{A} : H_{A} = 0,92 und das Seitenverhältnis B_{E} : H_{E} = 1,04. So kann beispielsweise vorgesehen sein, daß die Abtastfläche mit einer Breite B_{A} = 120 mm und einer Höhe H_{A} = 130 mm ausgeführt ist und als optoelektronischer Bildwandier eine CCD-Kamera vorhanden ist, die eine Empfangsfläche mit einem Seitenverhältnis B_{E} : H_{E} = 1,04 aufweist oder bei der eine Empfangsfläche mit einem Seitenverhältnis B_{E} : H_{E} = 1,04 nutzbar ist.

Die das Seitenverhältnis des Bildes beeinflussende optische Baugruppe ist bevorzugt als anamorphotische Optik mit drei Prismen und einem Objektiv ausgebildet. Damit ist ein einfacher Aufbau der gerätetechnischen Anordnung mit unkomplizierten, technologisch leicht herzustellenden Baueinheiten möglich.

In einer besonders bevorzugten Ausgestaltung der Erfindung besteht die Empfangsfläche der CCD-Kamera aus 3072 x 3072 Einzelsensoren, die in einem zweidimensionalen Raster angeordnet sind, wobei die Rasterabstände zwischen den einzelnen Sensoren in beiden Dimensionsrichtungen gleich groß sind. Hiervon kann beispielhaft eine Teilfläche genutzt werden, deren Seitenverhältnis (wie oben angegeben) B_{E} : H_{E} = 1,04 ist.

Die erfindungsgemäße Anordnung ist nun derart weiter ausgestaltet, daß die Ausgänge der Einzelsensoren über Analog-Digital-Wandler an der Recheneinheit anliegen, die über eine digitale Rechenschaltung zur Stauchung und/oder Streckung der Anzahl und Werte der Bildsignale in beiden Koordinaten des ebenen Bildes durch Interpolation verfügt.

Eine weitere vorteilhafte Ausgestaltung der erfindungsgemäßen Anordnung sieht vor, daß die Einstrahlungsrichtung der Beleuchtungsstrahlung innerhalb des Abtastprismas um einen Winkel α gegen die Abtastfläche geneigt ist, der die Gewinnung des Bildes nach dem Prinzip der gestörten Totalreflektion ermöglicht.

Weiterhin ist es vorteilhaft, wenn eine Richtungskomponente des eingestrahlten Beleuchtungsstrahlenganges wie auch des Abbildungsstrahlenganges parallel zur Richtung der Höhe H_{A} der Abtastfläche ausgerichtet sind. Damit ist eine wichtige Voraussetzung für die benutzerfreundliche Gestaltung eines Abtastgerates geschaffen.

Denkbar ist auch, das Aufnahmeprisma mit einer Heizvorrichtung zu koppeln, durch welche die Auflagefläche für die Hand bzw. die Finger auf eine Temperatur vorerwärmt wird, die eine Kondensation der Ausdünstungen der Haut bei kühler Umgebung verhindert.

### Kurze Beschreibung der Zeichnungen

Die Erfindung soll nachfolgend anhand eines Ausführungsbeispieles näher erläutert werden. In den zugehörigen Zeichnungen zeigen
- Fig.1: eine Anordnung nach dem bekannten Stand der Technik
- Fig.2: eine Anordnung nach dem Prinzip der Erfindung
- Fig.3: die Anordnung nach Fig.2 in einer Seitenansicht
- Fig.4: ein Gerät zur Aufnahme von Hand- und Fingerabdrücken auf der Grundlage der Erfindung
- Fig.5: eine Ansicht A aus Fig.4

### Ausführliche Beschreibung der Zeichnungen

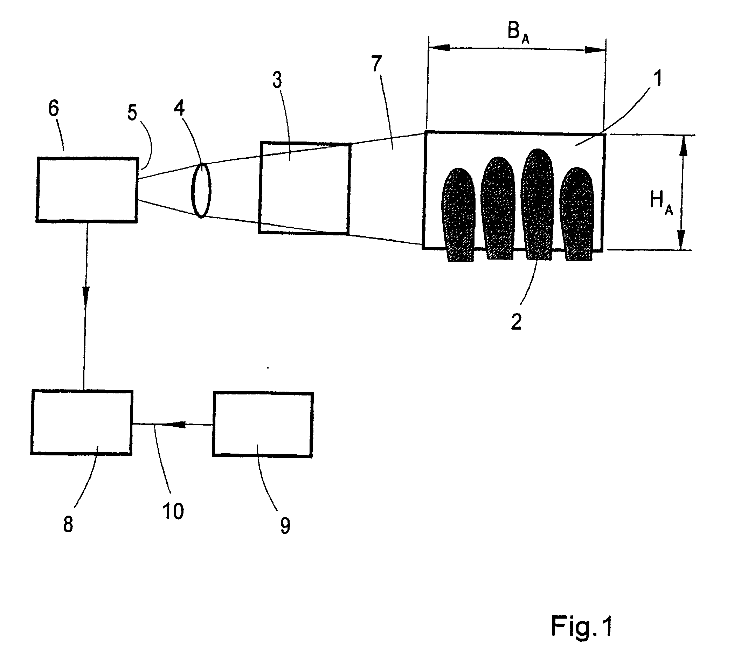

In Fig.1 ist schematisch eine Anordnung zur Aufnahme der simultanen Vierfinger dargestellt, wie sie in US 5,650,842 beschrieben ist. Dabei wird das ebene Bild der auf eine Abtastfläche 1 aufgelegten Finger 2 mittels einer anamorphotischen Optik, bestehend aus einer Prismenanordnung 3 und einem abbildenden Objektiv 4, auf die lichtempfindliche Empfangsfläche 5 einer Kamera 6 abgebildet. Der Abbildungsstrahlengang 7 verläuft senkrecht zu der Höhe H_{A} der Abtastfläche 1 und damit senkrecht zur Richtung der gestreckt aufgelegten Finger 2.

Die Abtastfläche 1 hat dabei die Form eines Rechtecks mit einer Breite B_{A} von 3.2 Inch und einer Höhe H_{A} von 2 Inch und folglich ein Seitenverhältnis von B_{A} : H_{A} ≈ 1,6. Die lichtempfindliche Empfangsfläche 5 der Kamera 6 hat ein Format von etwa 1300 Bildpunkten bezogen auf die Breite B_{E} und 1000 Bildpunkten bezogen auf die Höhe H_{E} und damit ein Seitenverhältnis B_{E} : H_{E} ≈ 1,3. Die anamorphotische Prismenanordnung 3 paßt das Format der Fingerabtastfläche mit Seitenverhältnis B_{A} : H_{A} ≈ 1,6 durch Stauchung in der Horizontalen um den Faktor 0,83 auf das Format der lichtempfindliche Empfangsfläche 5 mit B_{E} : H_{E} ≈ 1.3 an.

Die analogen Bildsignale gelangen von der Kamera 6 zu einem Analog-Digital-Wandler 8, dessen Abtastung mit einem Taktgenerator 9 gesteuert wird. Die Frequenz des Taktsignals 10 ist dabei im Verhältnis zum Auslese-Timing des analogen Bildsignals so gewählt, daß durch eine Überabtastung 1600 Abtastungen aus der Breite B_{E} vorgenommen werden und damit ein digitales Bild mit ungeändert 1000 Bildpunkten aus der Höhe H_{E}, jedoch mit auf 1600 erhöhter Anzahl von ausgelesenen Werten aus der Breite B_{E} entsteht.

Hierbei werden die Ergebnisse also nicht pixelsynchron ermittelt. Aus der Tatsache, daß die Seitenlänge der Abtastfläche von 3,2 Inch auf 1300 Pixel der Empfangsfläche übertragen wird, ergibt sich eine Auflösung von etwa 406 Pixeln/Inch. Diese Auflösung kann auch nicht dadurch erhöht werden, daß die aus den Pixeln gewonnenen 1300 Bildinformationen je Seitenlänge B_{E} in der beschriebenen Weise auf 1600 Werte erhöht werden, denn in den 1600 Werten sind tatsächlich nach wie vor nur 1300 verschiedenen Bildinformationen enthalten.

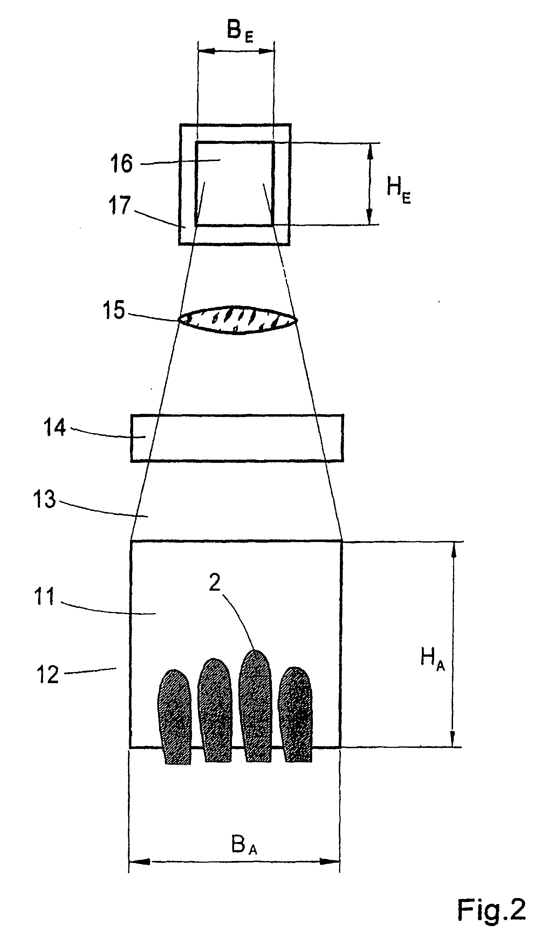

Im Gegensatz zu diesem Stand der Technik zeigt Fig.2 eine Prinzipdarstellung der erfindungsgemäßen Anordnung. Ein Abtastprisma 12 ist mit einer Abtastfläche 11 ausgestattet, die eine Breite B_{A} sowie eine davon verschiedene Höhe H_{A} aufweist, wobei die Breite B_{A} kleiner ist als die Höhe H_{A} und demzufolge das Seitenverhältnis B_{A} : H_{A} < 1 ist. Die Finger 2 werden dabei parallel zur Richtung der Höhe H_{A} aufgelegt. Mit dem Strahlengang 13, der hierbei (anders als beim Stand der Technik) parallel zur Richtung der Finger 2 ausgerichtet ist, gelangt das flache Abbild der Oberflächenstrukturen der Finger 2 zur optischen Korrektureinheit 14 und dann über eine Linsenanordnung 15 auf die rechteckige Empfangsfläche 16 eines optoelektronischen Bildwandlers 17, vorzugsweise auf die Empfangsfläche 16 einer CCD-Kamera.

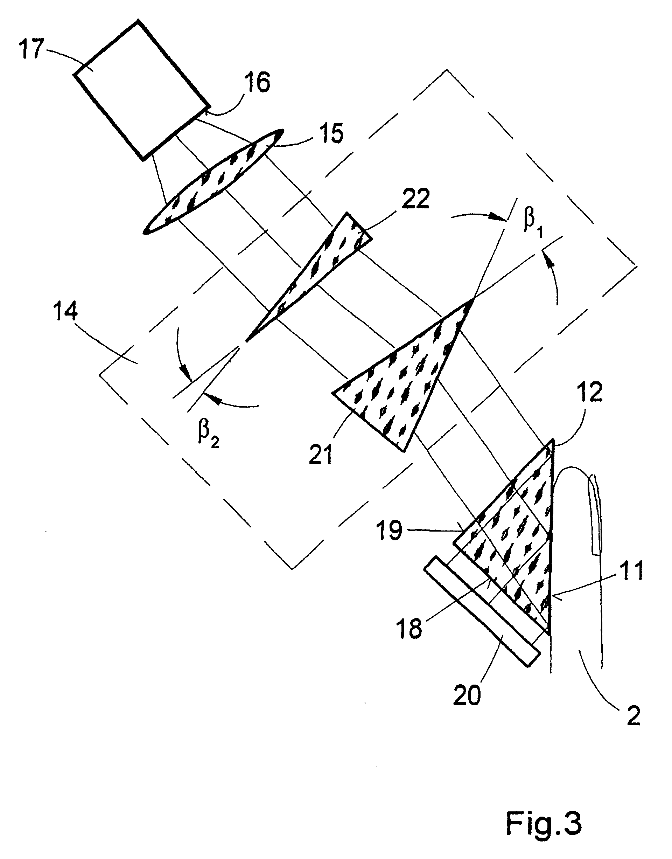

Fig.3 zeigt die Seitenansicht der Prinzipdarstellung aus Fig.2. Hier ist das Abtastprisma 12 zu erkennen, das mit der Abtastfläche 11, mit einer Einstrahlfläche 18 und mit einer Austrittsfläche 19 ausgestattet ist. Der Einstrahlfläche 18 gegenüber ist eine flache Beleuchtungsquelle 20 angeordnet, die vorteilhaft als zweidimensionale Anordnung einer Vielzahl von lichtemittierenden Dioden (LEDs) mit nachfolgendem Diffusor ausgebildet ist. Die Beleuchtungsquelle 20 dient der internen Beleuchtung des Abtastprisma 12 bzw. der Abtastfläche 11 in der Weise, daß ein Abbild der Oberflächenstruktur und damit der Charakteristik der Finger und/oder anderer Flächenabschnitte der Hand nach dem Prinzip der gestörten Totalreflexion aufgenommen wird.

In Fig.3 ist weiterhin zu erkennen, daß die Korrektureinheit 14 aus zwei Korrekturprismen 21 und 22 besteht. Die Anordnung der Korrekturprismen 21, 22 in der Beziehung zum Abtastprisma 12 sowie deren Prismenwinkel β₁ und β₂ sind so gewählt, daß mit der anamorphotischen Vergrößerung eine Änderung des Seitenverhältnisses des flachen Abbildes der Oberflächenstruktur erfolgt, indem die Breite gestreckt wird, so daß diese nachfolgend größer als die Höhe ist.

Das hat beabsichtigt zur Folge, daß auf die rechteckige Empfangsfläche 16 des optoelektronischen Bildwandlers 17 ein in einer Richtung, nämlich in Richtung der Breite B, gestrecktes und damit verzerrtes Bild trifft. In der Ebene der Empfangsfläche 16 entsteht so ein verzerrtes Bild mit dem Seitenverhältnis B_{E} : H_{E} > 1.

Das derart verzerrte Bild der Oberflächenstruktur wird mittels des optoelektronischen Bildwandlers 17 in eine analoge Bildinformation umgewandelt. Die Umwandlung erfolgt dabei vorzugsweise nach dem CCD-Prinzip mit einem lichtempfindlichen zweidimensionalen Array von Einzelsensoren. Die Einzelsensoren sind vorteilhaft in einem quadratischen Raster mit gleichgroßen Abständen zueinander angeordnet, jeweils gemessen von Mittenpunkt zu Mittenpunkt zweier benachbarter Einzelsensoren. Bei der Umwandlung der optischen in analoge elektronische Bildsignale wird das Seitenverhältnis B_{E} : H_{E} > 1 des verzerrten Bildes beibehalten.

Mit anderen Worten: die mit Breite B_{A} bezeichnete Seitenlänge der Abtastfläche 11 wird auf die mit Breite B_{E} bezeichnete Seitenlänge der Empfangsfläche 16 projiziert, während die mit Höhe H_{A} bezeichnete Seitenlänge der Abtastfläche 11 auf die mit Höhe H_{E} bezeichnete Seitenlänge der Empfangsfläche 16 gerichtet ist, wobei eine Änderung des Seitenverhältnisses von B_{A} : H_{A} < 1 auf B_{E} : H_{E} > 1 erfolgt und am Sensorausgang ein optisch verzerrtes analoges Bild vorliegt.

In einem dem optoelektronischen Bildwandler 17 nachgeschalteten Analog-Digital-Wandler (nicht dargestellt) werden weiterhin die analogen Bildsignale synchron zur Information jedes Einzelsensors digitalisiert und erst nach der Digitalisierung das Seitenverhältnis B_{E} : H_{E} > 1 des flachen Abbildes durch Stauchung in Richtung der Breite B soweit geändert, bis das ursprüngliche Seitenverhältnis von B_{A} : H_{A} < 1 wieder erreicht ist. Vorteilhafterweise wird diese Stauchung mit Hilfe einer digitalen Recheneinheit (nicht dargestellt) durch Ausführung einer Interpolationsfunktion vorgenommen. Am Ausgang dieser digitalen Recheneinheit ist ein Bild verfügbar, dessen Seitenverhältnis mit dem Seitenverhältnis B_{A} : H_{A} < 1 der Abtastfläche 11 übereinstimmt. Damit ist eine unverzerrte Wiedergabe bei hoher Bildgüte gewährleistet.

Es liegt im Rahmen der Erfindung, von der Breite B und der Höhe H einer handelsüblichen oder genormten Gesamtsensorfläche nicht die gesamte verfügbare Breite B und/oder nicht die gesamte verfügbare Höhe H zu nutzen, sondern es kann vorteilhaft vorgesehen sein, die optische Übertragung von der Abtastfläche 11 zur Gesamtsensorfläche so vorzunehmen, daß die in Anspruch genommene Empfangsfläche der Breite B_{E} und der Höhe H_{E} lediglich einer Teilfläche der Gesamtsensorfläche entspricht. Dabei kann in Abhängigkeit von den tatsächlichen Größenverhältnissen bezogen auf die Höhe eine Anzahl Bildpunkte ungenutzt bleiben, die sich aus der Differenz H - H_{E} und/oder aus der Differenz B - B_{E} ergibt, wie nachfolgend gezeigt wird.

Wird das Seitenverhältnis B_{A}:H_{A} = 120mm : 130 mm ≈ 0,92 ausgeführt und ein optoelektronischen Bildwandler 17 mit insgesamt 3072 x 3072 Einzelsensoren bzw. Pixeln verwendet, kann das von der Abtastfläche 11 abgenommene Bild beispielhaft auf eine Sensorteilfläche mit dem Seitenverhältnis B_{E} : H_{E} = 2704 Pixel : 2600 Pixel = 1,04 gerichtet werden.

Nach dem Auslesen der für die Projektion in Anspruch genommenen Sensorteilfläche liegt ein optisch verzerrtes Bild aus 2704 x 2600 analogen Bildinformationen vor. Das entspricht bezogen auf B_{A} = 120mm ≈ 4,72 Inch einer optischen Auflösung von etwa 572 Pixel/Inch und bezogen auf H_{A} = 130mm ≈ 5,12 Inch einer optischen Auflösung von 508 Pixel/Inch.

Im nächsten Verfahrensschritt wird nun das optisch verzerrte Bild zunächst digitalisiert, und zwar synchron zur Bildinformation eines jedes einzelnen Bildsensors, wodurch für jede von einem lichtempfindlichen Einzelsensor kommende Bildinformation genau ein digitaler Wert vorliegt. Anders als im Stand der Technik wird also eine bildpunktsynchrone Digitalisierung vorgenommen, nach welcher im gewählten Beispiel ein Datensatz von 2704 x 2600 Werten vorhanden ist.

Erst das in Form eines solchen Datensatzes immer noch verzerrt vorliegende Bild wird nun rechnerisch wie weiter oben beschrieben in Richtung der Breite wieder gestaucht, wobei ein Stauchungsfaktor vorgesehen ist, der genau der zuvor mit der anamorphotischen Optik bewirkten Verzerrung entspricht, so daß diese Verzerrung kompensiert wird. Als Ergebnis liegt ein unverzerrtes digitales Abbild der aufgenommenen Oberflächenstruktur vor.

Auf diese Weise stehen nunmehr 2400 Werte für die Breite B_{A} = 120mm und 2600 Werte für die Höhe H_{A} = 130mm zur Verfügung, was einer Auflösung von 508 dpi bezogen auf die Breite B_{A} und einer Auflösung von 508 dpi bezogen auf die Höhe H_{A} entspricht.

Das Seitenverhältnis des digitalen Abbildes ist damit gleich dem Seitenverhältnis des mit der Abtastfläche aufgenommenen Bildes.

Selbstverständlich liegt es im Rahmen der Erfindung, eine von dem Beispiel B_{E} : H_{E} = 2704 Pixel : 2600 Pixel = 1,04 abweichende Sensorteilfläche zu nutzen, etwa B_{E} : H_{E} = 2858 Pixel : 2600 Pixel ≈ 1,1 o.ä. Hierin ist zugleich einer der wesentlichen Vorteile zu sehen, durch den sich die vorliegende Erfindung vom Stand der Technik abhebt: die anamorphotische Optik kann im Hinblick auf ihre optischen Eigenschaften und auch unter technologischen Gesichtspunkten optimal gestaltet werden; die Variationsbreite bei der Gestaltung der anamorphotischen Optik ist nicht mehr wie beim Stand der Technik bereits eingeengt durch die Notwendigkeit, die Seitenlängen der Abtastfläche (3,2 x 2 Inches) auf die Seitenlängen der Gesamtsensorfläche (1300 x 1000 Pixel) übertragen zu müssen, um die mögliche optische Auflösung auszuschöpfen zu können. Erfindungsgemäß wird also neben der Lösung der weiter oben genannten Probleme (hohe Auflösungsgenauigkeit bei großer Abtastfläche) auch noch die Optimierung der optischen Baugruppen erzielt.

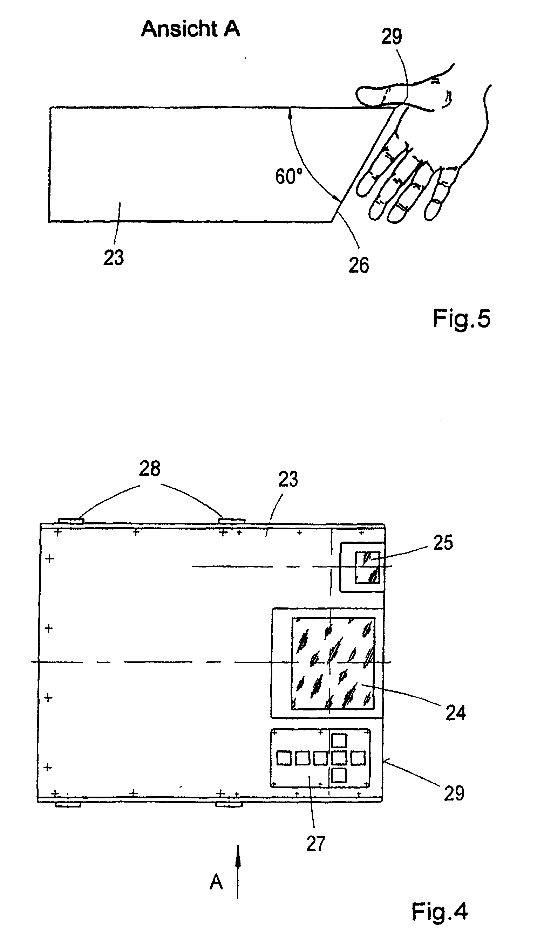

In Fig.4 ist eine Gerätekonfiguration dargestellt, die auf der Grundlage der vorbeschriebenen Anordnung zur Ausführung des erfindungsgemäßen Verfahrens geeignet ist. Hierbei sind die funktionswichtigen Baugruppen für die Aufnahme der Finger- bzw. Handabdrücke in ein dichtes Gehäuse 23 eingebaut. In der in Fig.4 gezeigten Draufsicht ist die Oberseite des Gehäuses 23 erkennbar, auf der sich die rechteckigen optischen Abtastflächen 24, 25 zweier Abtastprismen befinden. Das kleinere Prisma hat eine Abtastfläche 25 etwa der Größe von 40mm x 40mm oder kleiner und dient der Aufnahme von gerollten oder flachen Fingerabdrücken. Das größere Prisma hat eine Abtastfläche 24 etwa von 120mm x 130mm und dient der Aufnahme von Handinnenflächen und von simultan aufzunehmenden Fingern.

Das Gerät besitzt zwei optische Systeme, die innerhalb des Gehäuses 23 jeweils mit den Abtastflächen 24, 25 verbunden sind. Die Frontfläche 26 des Gerätes ist zum Geräteinneren hin um einen Winkel von etwa 60 Grad geneigt, was zu einer ergonomischen Verbesserung im Hinblick auf das Abrollen des Fingers auf der Abtastfläche 24 durch die benutzende Person führt. Außerdem führt diese Neigung der Frontfläche 26 bezüglich des Auflegens des Daumens oder auch der simultanen Auflage beider Daumen auf die größere Abtastfläche 24 zu einer im Vergleich zum Stand der Technik verbesserten Handhabbarkeit, weil dabei die übrigen Vierfinger einer Hand bzw. beider Hände der Neigung der Frontfläche 26 folgend unter die vordere obere Gerätekante 29 gehalten werden können, wie das in Fig.5 dargestellt ist. Das kommt der begrenzten Beweglichkeit der menschlichen Hand entgegen.

Die Bedienung des Gerätes erfolgt mit einer Flachtastatur 27, die in die Oberseite des Gehäuses 23 integriert ist. An den beiden seitlichen Begrenzungsflächen sind Montageelemente 28 vorgesehen, die der Befestigung des Gerätes beispielsweise am Einsatzort dienen. Mittels der Montageelemente 28 ist es möglich, das Gerät bei Bedarf in unterschiedlicher Arbeitshöhe in einem dafür geeignet ausgebildeten Schrank anzubringen, so daß dadurch den Bedürfnissen des Anwenders nach einem flexibel in der Höhe verstellbaren Hand- und Fingerscanner entsprochen werden kann. Durch die geschlossene Ausbildung des Gehäuses 23 kann das Gerät alternativ auch als Auftischgerät genutzt werden.

## Patentansprüche

1. Verfahren zur Gewinnung von Bildinformationen über die Oberflächenstruktur einer Handinnenfläche, einer Handkante, der Vierfinger und/oder eines Daumens, wobei der betreffende Oberflächenabschnitt auf eine die Breite B_{A} und die Höhe H_{A} aufweisende Abtastfläche (11) eines Abtastprismas (12) aufgelegt wird, mit einem intern auf die Abtastfläche (11) gerichteten und von der Abtastfläche (11) reflektierten Strahlengang (13) ein Bild der Oberflächenstruktur aufgenommen und dieses Bild nachfolgend auf eine rechteckige Empfangsfläche (16) eines aus einer Vielzahl von Einzelsensoren gebildeten opto-elektronischen Bildwandlers (17) projiziert wird, die die Breite B_{E} und die Höhe H_{E} und ein Seitenverhältnis B_{E} : H_{E} > 1 aufweist, **dadurch gekennzeichnet,**
- **daß** das Bild der Oberflächenstruktur mit einem Seitenverhältnis B_{A} : H_{A} < 1 aufgenommen wird, wobei die Finger (2) der auf die Abtastfläche aufgelegten Hand parallel zur Höhe H_{A} ausgerichtet sind,
- **daß** das Seitenverhältnis des Bildes während der optischen Übertragung von der Abtastfläche (11) zum opto-elektronischen Bildwandler (17) geändert wird, wobei die Höhe so gestaucht und/oder die Breite so gestreckt wird, daß auf die Empfangsfläche (16) ein auf das Seitenverhältnis B_{E} : H_{E} > 1 optisch verzerrtes Bild gelangt,
- **daß** das optisch verzerrte Bild in elektronische Bildinformationen gewandelt wird, wobei für jedes Ausgangssignal eines Einzelsensors genau ein analoger oder digitaler Wert gewonnen wird und
- nachfolgend die elektronische Bildinformation einer rechnerischen Änderung des Seitenverhältnisses unterzogen wird, wobei die Höhe rechnerisch gestreckt und/oder die Breite rechnerisch gestaucht wird, bis das ursprüngliche Seitenverhältnis B_{A} : H_{A} < 1 wiederhergestellt ist.

2. Verfahren nach Anspruch 1, **dadurch gekennzeichnet, daß** das Bild von einer Abtastfläche (11) mit einem Seitenverhältnis B_{A} : H_{A} = 0,92 gewonnen und das Seitenverhältnis des Bildes im Verlaufe der optischen Übertragung von der Abtastfläche (11) zur Empfangsfläche (16) in das Seitenverhältnis B_{E} : H_{E} = 1.04 geändert wird.

3. Verfahren nach Anspruch 1 oder 2; **dadurch gekennzeichnet, daß** das Seitenverhältnis des Bildes auf dem Weg von der Abtastfläche (11) zur Empfangsfläche (16) mit Hilfe einer anamorphotischen optischen Baugruppe, die aus drei Prismen und einem Objektiv besteht, geändert wird.

4. Verfahren nach einem der vorgenannten Ansprüche, **dadurch gekennzeichnet, daß** die rechnerische Stauchung der Höhe und/oder die rechnerische Streckung der Breite durch Interpolation der elektronischen Bildsignale erfolgt.

5. Verfahren nach einem der vorgenannten Ansprüche, **dadurch gekennzeichnet, daß** das am Ausgang der Recheneinheit mit dem Seitenverhältnis B_{A} : H_{A} < 1 abgenommene Bild über einen Monitor visuell wahrnehmbar ausgegeben wird.

6. Verfahren nach einem der vorgenannten Ansprüche, **dadurch gekennzeichnet, daß** das Bild nach dem Prinzip der diffusen Reflexion vor dunklem Hintergrund von den Punkten der Abtastfläche (11) gewonnen wird, die sich mit Strukturerhebungen der Hand in Kontakt befinden.

7. Verfahren nach einem der Ansprüche 1 bis 5, **dadurch gekennzeichnet, daß** das Bild nach dem Prinzip der gestörten Totalreflexion von den Punkten der Abtastfläche (11) gewonnen wird, die sich mit Strukturerhebungen der Hand in Kontakt befinden.

8. Anordnung zur Gewinnung einer Bildinformation über die Oberflächenstruktur eines oder mehrerer Finger und/oder der Innenfläche einer Hand, mit einem Abtastprisma (12), das eine Abtastfläche (11) der Breite B_{A} und der Höhe H_{A} zur Auflage der Finger (2) bzw. der Handinnenfläche aufweist, mit einer Beleuchtungsquelle (20), deren Strahlengang (13) innerhalb des Abtastprismas (12) unter einem Winkel α auf die Abtastfläche (11) gerichtet ist und mit einem optoelektronischen Bildwandler (17), der eine aus einer Vielzahl von Einzelsensoren gebildete Empfangsfläche (16) mit mindestens einer Breite B_{E} und mindestens einer Höhe H_{E} bei einem Seitenverhältnis B_{E} : H_{E} > 1 aufweist und der in dem von der Abtastfläche (11) reflektierten Strahlengang (13) angeordnet ist, **dadurch gekennzeichnet,**
- **daß** die Abtastfläche (11) und das gewonnene Bild der Oberflächenstruktur ein Seitenverhältnis B_{A} : H_{A} < 1 aufweisen,
- **daß** in dem von der Abtastfläche (11) reflektierten Beleuchtungsstrahlengang mindestens eine das Seitenverhältnis des Bildes beeinflussende optische Baugruppe (14) vorgesehen ist, durch die eine optische Streckung der Breite und/oder eine optische Stauchung der Höhe und damit eine optische Verzerrung des Bildes auf das Seitenverhältnis B_{E} : H_{E} > 1 erfolgt,
- **daß** den Einzelsensoren des opto-elektronischen Bildwandlers (17) Analog-Digital-Wandler zur Wandlung der Ausgangssignale in jeweils genau einen digitalen Wert sowie eine Recheneinheit nachgeschaltet sind, in welcher eine rechnerische Stauchung der Breite und/oder eine rechnerische Streckung der Höhe und damit eine Entzerrung des Bildes auf das ursprüngliche Seitenverhältnis B_{A} : H_{A} < 1 vorgenommen wird.

9. Anordnung nach Anspruch 8, **dadurch gekennzeichnet, daß** das Seitenverhältnis B_{A} : H_{A} = 0,92 und das Seitenverhältnis B_{E} : H_{E} = 1,04 beträgt.

10. Anordnung nach Anspruch 8 oder 9, **dadurch gekennzeichnet, daß** die Abtastfläche mit einer Breite B_{A} = 120mm und einer Höhe H_{A} = 130mm ausgeführt ist, als optoelektronischer Bildwandler (17) eine CCD-Kamera vorgesehen ist, von der eine Empfangsfläche (16) mit einem Seitenverhältnis B_{E} : H_{E} = 1,04 genutzt wird und die optische Baugruppe (14) als anamorphotische Optik mit zwei Prismen (21,22) ausgebildet ist.

11. Anordnung nach einem der Ansprüche 8 bis 10, **dadurch gekennzeichnet, daß** die Empfangsfläche (11) aus in einem zweidimensionalen quadratischen Raster angeordneten Einzelsensoren besteht.

12. Anordnung nach Anspruch 11, **dadurch gekennzeichnet, daß** am Ausgang eines jeden Einzelsensors ein elektronisches Bildsignal in analoger Form vorliegt, den Einzelsensoren mindestens ein Analog-Digital-Wandler nachgeschaltet ist und die Recheneinheit über eine digitale Rechenschaltung zur Verringerung und/oder Erhöhung der Anzahl und Werte der Bildsignale durch Interpolation verfügt.

13. Anordnung nach einem der Ansprüche 8 bis 12, **dadurch gekennzeichnet, daß** die interne Einstrahlungsrichtung der Beleuchtungsstrahlung um einen solchen Winkel α gegen die Abtastfläche geneigt ist, der die Gewinnung des Bildes der Oberflächenstruktur nach dem Prinzip der gestörten Totalreflexion ermöglicht und daß eine Richtungskomponente des eingestrahlten Beleuchtungsstrahlenganges wie auch des Abbildungsstrahlenganges parallel zur Höhe H_{A} der Abtastfläche (11) ausgerichtet ist.

14. Anordnung nach einem der Ansprüche 8 bis 13, **dadurch gekennzeichnet, daß** der Recheneinheit ein Monitor zur Ausgabe eines visuell wahrnehmbaren Bildes nachgeschaltet ist.

15. Anordnung nach einem der Ansprüche 8 bis 14, **dadurch gekennzeichnet, daß** das Aufnahmeprisma (12) mit einer Heizvorrichtung gekoppelt ist, durch welche die Aufnahmefläche auf eine Temperatur erwärmt wird, die eine Kondensation der Ausdünstungen der Haut bei kühler Umgebung verhindert.

## Claims

1. Method of obtaining image data concerning the surface structure of the inner surface of a hand, the edge of a hand, the four fingers and/or a thumb, whereby the relevant surface portion is placed on a scanning surface (11) of a scanning prism (12), the scanning surface having the width B_{A} and the height H_{A}, an image of the surface structure is recorded using a beam path (13) directed internally onto the scanning surface (11) and reflected by the scanning surface (11) and this image is then projected onto a rectangular receiving surface (16) of an opto-electronic image converter (17) which is formed from a plurality of individual sensors and has the width B_{E} and the height H_{E} and an aspect ratio B_{E} : H_{E} > 1, **characterised in that**
- the image of the surface structure is recorded with an aspect ratio B_{A} : H_{A} < 1, the fingers (2) of the hand placed on the scanning surface being oriented parallel to the height H_{A},
- the aspect ratio of the image is altered during the optical transmission from the scanning surface (11) to the opto-electronic image converter (17), whereby the height is compressed and/or the width is stretched so that an image optically distorted to the aspect ratio B_{E} : H_{E} > 1 arrives on the receiving surface (16),
- the optically distorted image is converted into electronic image data, whereby an analogue or digital value is obtained precisely for each output signal of an individual sensor, and
- then the electronic image data is subjected to computerised alteration of the aspect ratio, whereby the height is stretched by computer and/or the width is compressed by computer, until the original aspect ratio B_{A} : HA < 1 is restored.

2. Method as claimed in Claim 1, **characterised in that** the image is obtained from a scanning surface (11) with an aspect ratio B_{A} : H_{A} = 0.92 and in the course of the optical transmission from the scanning surface (11) to the receiving surface (16) the aspect ratio of the image is changed to the aspect ratio B_{E} : H_{E} = 1.04.

3. Method as claimed in Claim 1 or 2, **characterised in that** the aspect ratio of the image is changed on the way from the scanning surface (11) to the receiving surface (16) with the aid of an anamorphotic optical assembly consisting of three prisms and an objective.

4. Method as claimed in one of the preceding claims, **characterised in that** the computerised compression of the height and/or the computerised stretching of the width takes place by interpolation of the electronic image signals.

5. Method as claimed in one of the preceding claims, **characterised in that** the image picked up at the output of the computer unit with the aspect ratio B_{A} : H_{A} < 1 is output via a monitor so that it can be perceived visually.

6. Method as claimed in one of the preceding claims, **characterised in that** the image is obtained using the principle of diffuse reflection in front of a dark background from the points on the scanning surface (11) which are in contact with raised structures of the hand.

7. Method as claimed in one of Claims 1 to 5, **characterised in that** the image is obtained using the principle of disturbed total reflection from the points on the scanning surface (11) which are in contact with raised structures of the hand.

8. Arrangement for obtaining image data concerning the surface structure of one or more fingers and/or the inner surface of a hand, with a scanning prism (12) which has a scanning surface (11) of width B_{A} and height H_{A} on which the finger (2) or the inner surface of the hand is placed, with a light source (20) from which the beam path (13) within the scanning prism (12) is directed at an angle α onto the scanning surface (11) and with an opto-electronic image converter (17) having a receiving surface (16) which is formed from a plurality of individual sensors and has at least a width B_{E} and at least a height H_{E} at an aspect ratio B_{E} : H_{E} > 1, the said image converter being disposed in the beam path (13) reflected by the scanning surface (11), **characterised in that**
- the scanning surface (11) and the image of the surface structure which is obtained have an aspect ratio B_{A} : H_{A} < 1,
- in the light beam path reflected by the scanning surface (11) there is provided at least one optical component (14) which influences the aspect ratio and which effects an optical stretching of the width and/or an optical compression of the height and thus an optical distortion of the image to the aspect ratio B_{E} : H_{E} > 1,
- downstream of the individual sensors of the opto-electronic image converter (17) there are connected analogue/digital converters for conversion of each of the output signals into precisely one digital value as well as a computer unit in which computerised compression of the width and/or computerised stretching of the height and thus a distortion of the image to the original aspect ratio B_{A} : H_{A} < 1 is carried out.

9. Arrangement as claimed in Claim 8, **characterised in that** the aspect ratio B_{A} : H_{A} = 0.92 and the aspect ratio B_{E} : H_{E} = 1.04.

10. Arrangement as claimed in Claim 8 or 9, **characterised in that** the scanning surface is constructed with a width B_{A} = 120 mm and a height H_{A} = 130 mm, a CCD camera of which a receiving surface (16) with an aspect ratio B_{E} : H_{E} = 1.04 is used is provided as opto-electronic image converter (17), and the optical component (14) is constructed as an anamorphotic optical unit with two prisms (21, 22).

11. Arrangement as claimed in one of Claims 8 to 10, **characterised in that** the receiving surface (11) consists of individual sensors disposed in a two-dimensional square grid.

12. Arrangement as claimed in Claim 11, **characterised in that** at the output of each individual sensor an electronic image signal is present in analogue form, at least one analogue/digital converter is connected downstream of the individual sensors and the computer unit has a digital computing circuit for decreasing and/or increasing the number and values of the image signals by interpolation.

13. Arrangement as claimed in one of Claims 8 to 12, **characterised in that** the internal direction of incidence of the light beam is inclined against the scanning surface by an angle α which enables the image of the surface structure to be obtained using the principle of disturbed total reflection and that a direction component of the incident light beam path and also of the imaging beam path is oriented parallel to the height H_{A} of the scanning surface (11).

14. Arrangement as claimed in one of Claims 8 to 13, **characterised in that** a monitor for output of a visually perceptible image is connected downstream of the computer unit

15. Arrangement as claimed in one of Claims 8 to 14, **characterised in that** the recording prism (12) is coupled to a heating device by which the recording surface is heated to a temperature which prevents condensation of the perspiration of the skin in a cool environment.

## Revendications

1. Procédé pour obtenir des informations d'images concernant la structure superficielle de la paume de la main, du tranchant de la main, des quatre doigts et/ou d'un pouce, la partie de surface concernée étant placée sur une surface de balayage (11) présentant la largeur (B_{A}) et la hauteur (H_{A}), d'un prisme de balayage (12), une image de la structure superficielle étant prise avec un faisceau de rayons (13) orienté à l'intérieur vers la surface de balayage (11) et réfléchi par la surface de balayage (11), et cette image étant ensuite projetée sur une surface de réception (16) rectangulaire d'un convertisseur d'image optoélectronique (17) formé à partir d'une pluralité de capteurs individuels, lequel convertisseur présente la largeur (B_{E}) et la hauteur (H_{E}) et un rapport des côtés B_{E} : H_{E} > 1, **caractérisé**
- **en ce que** l'image de la structure superficielle est prise avec un rapport des côtés B_{A} : H_{A} < 1, les doigts (2) de la main posée sur la surface de balayage étant orientés parallèlement à la hauteur (H_{A}),
- **en ce que** le rapport des côtés de l'image est modifié pendant la transmission optique de la surface de balayage (11) au convertisseur d'image optoélectronique (17), la hauteur étant comprimée et/ou la largeur étirée de manière que parviennent sur la surface de réception (16) une image optiquement déformée au rapport des côtés B_{E} : H_{E} > 1,
- **en ce que** l'image déformée optiquement est convertie en information électronique d'image, pour chaque signal de sortie d'un capteur individuel étant obtenue une valeur analogique ou numérique, et
- l'information d'image électronique est soumise ensuite à une modification par le calcul du rapport des côtés, la hauteur étant étirée par le calcul et/ou la largeur comprimée par le calcul, jusqu'à ce que soit rétabli le rapport initial des côtés B_{A} : H_{A} < 1.

2. Procédé selon la revendication 1, **caractérisé en ce qu'**on obtient l'image d'une surface de balayage (11) avec un rapport des côtés B_{A} : H_{A} = 0,92, et le rapport des côtés de l'image est modifié au cours de la transmission optique depuis la surface de balayage (11) jusqu'à la surface de réception (16), dans le rapport des côtés B_{E} : H_{E} = 1,04.

3. Procédé selon la revendication 1 ou 2, **caractérisé en ce que** le rapport des côtés de l'image est modifié sur le parcours de la surface de balayage (11) à la surface de réception (16), à l'aide d'un groupe optique anamorphosique qui est constitué de trois prismes et d'un objectif.

4. Procédé selon l'une des revendications précédentes, **caractérisé en ce que** la compression par calcul de la hauteur et/ou l'extension par calcul de la largeur s'effectue par interpolation des signaux d'image électroniques.

5. Procédé selon l'une des revendications précédentes, **caractérisé en ce que** l'image prélevée à la sortie de l'unité de calcul avec le rapport des côtés B_{A} : H_{A} < 1, est délivrée de manière perceptible visuellement, à travers un moniteur.

6. Procédé selon l'une des revendications précédentes, **caractérisé en ce que** l'image est obtenue suivant le principe de la réflexion diffuse devant un arrière-plan sombre des points de la surface de balayage (11) qui sont en contact avec des reliefs structurels de la main.

7. Procédé selon l'une des revendications 1 à 5, **caractérisé en ce que** l'image est obtenue suivant le principe de la réflexion totale perturbée des points de la surface de balayage (11) qui sont en contact avec des reliefs naturels de la main.

8. Dispositif pour obtenir une information imagée relative à la structure superficielle d'un ou de plusieurs doigts et/ou de la paume d'une main, comportant un prisme de balayage (12) qui présente une surface de balayage (11) de largeur (B_{A}) et de hauteur (H_{A}) pour y poser les doigts (2) ou la paume de la main, comportant une source d'éclairage (20) dont le faisceau de rayons (13) est orienté à l'intérieur du prisme de balayage (12) suivant un angle α vers la surface de balayage (11), et comportant un convertisseur d'image optoélectronique (17) qui comporte une surface de réception (16), formée par un grand nombre de capteurs individuels, avec au moins une largeur (B_{E}) et au moins une hauteur (H_{E}) pour un rapport des côtés B_{E} : H_{E} > 1, et qui est disposé dans le faisceau de rayons (13) réfléchi par la surface de balayage (11), **caractérisé en ce que**
- la surface de balayage (11) et l'image obtenue de la structure superficielle présentent un rapport des côtés B_{A} : H_{A} < 1,
- dans le faisceau des rayons d'éclairage réfléchis par la surface de balayage (11), est prévu au moins un groupe optique (14) influençant le rapport des côtés de l'image, par lequel s'effectue un étirement optique de la largeur et/ou une compression optique de la hauteur et donc une distorsion optique de l'image, au rapport des côtés B_{E} : H_{E} > 1,
- en aval des capteurs individuels du convertisseur d'image optoélectronique (17) sont montés des convertisseurs analogiques-numériques pour la conversion des signaux de sortie en une valeur numérique précise, ainsi qu'une unité de calcul dans laquelle il est procédé à une compression par le calcul de la largeur et/ou à un étirement par le calcul de la hauteur, et donc à une distorsion de l'image au rapport initial des côtés B_{A} : H_{A} < 1.

9. Dispositif selon la revendication 8, **caractérisé en ce que** le rapport des côtés B_{A} : H_{A} = 0,92 et le rapport des côtés B_{E} : H_{E} = 1,04.

10. Dispositif selon la revendication 8 ou 9, **caractérisé en ce que** la surface de balayage présente une largeur B_{A} = 120 mm et une hauteur H_{A}= 130 mm, **en ce qu'**il est prévu comme convertisseur d'image optoélectronique (17) une caméra CCD dont une surface de réception (16) est utilisée avec un rapport des côtés B_{E} : H_{E} = 1,04 et le groupe optique (14) est réalisé en tant qu'optique anamorphosique avec deux prismes (21, 22).

11. Dispositif selon l'une des revendications 8 à 10, **caractérisé en ce** la surface de réception (11) est constituée de capteurs individuels disposés suivant une trame carrée bidimensionnelle.

12. Dispositif selon la revendication 2, **caractérisé en ce qu'**à la sortie de chaque capteur individuel se trouve un signal d'image électronique sous une forme analogique, **en ce qu'**en aval des capteurs individuels est monté au moins un convertisseur analogique-numérique et l'unité de calcul dispose d'un circuit de calcul numérique pour réduire et/ou augmenter le nombre et les valeurs des signaux d'image par interpolation.

13. Dispositif selon l'une des revendications 8 à 12, **caractérisé en ce que** la direction de rayonnement interne du rayonnement d'éclairage est inclinée d'un angle α par rapport à la surface de balayage, tel que l'obtention de l'image de la structure superficielle soit possible suivant le principe de la réflexion totale perturbée, et **en ce qu'**une composante de direction du faisceau de rayons d'éclairage émis ainsi que du faisceau de rayons de reproduction est parallèle à la hauteur H_{A} de la surface de balayage (11).

14. Dispositif selon l'une des revendications 8 à 13, **caractérisé en ce qu'**en aval de l'unité de calcul est monté un moniteur pour l'édition d'une image perceptible visuellement.

15. Dispositif selon l'une des revendications 8 à 14, **caractérisé en ce que** le prisme de balayage (12) est couplé à un dispositif de chauffage par lequel la surface de balayage est chauffée à une température qui empêche une condensation de l'évaporation de la peau en cas de milieu ambiant froid.
